# EUROPEAN PATENT SPECIFICATION

(11) **EP 3 540 512 B1**
(45) Date of publication and mention of the grant of the patent: **06.04.2022**
(21) Application number: 18181153.0
(22) Date of filing: 02.07.2018
(51) Int. Cl.: G03B 21/20, G02B 27/48

(54) **LASER PROJECTION APPARATUS**
LASERPROJEKTIONSVORRICHTUNG
APPAREIL DE PROJECTION LASER

(30) Priority: 16.03.2018 CN 201810219614; 16.03.2018 CN 201810218722; 16.03.2018 CN 201810218721; 16.03.2018 CN 201810219611; 16.03.2018 CN 201820361401 U
(43) Date of publication of application: 18.09.2019
(73) Proprietor: Qingdao Hisense Laser Display Co., Ltd., 266555 Qingdao Shandong (CN)
(72) Inventor: TIAN, Youliang, Qingdao, Shandong 266555 (CN); LI, Wei, Qingdao, Shandong 266555 (CN); ZHOU, Zinan, Qingdao, Shandong 266555 (CN); SUN, Peng, Qingdao, Shandong 266555 (CN)
(74) Representative: Casalonga

(56) References cited:
- WO-A1-2015/149877
- CN-A- 102 608 855
- JP-A- 2007 047 245
- US-A1- 2014 354 956
- US-B1- 9 116 421

## Description

This application claims priority to Chinese Patent Application No. 201810219614.7, filed on March 16, 2018, titled "A TRICHROMATIC LASER SOURCE AND LASER PROJECTION APPARATUS", Chinese Patent Application No. 201810218722.2, filed on March 16, 2018, titled "A TRICHROMATIC LASER SOURCE AND LASER PROJECTION APPARATUS", Chinese Patent Application No. 201810218721.8, filed on March 16, 2018, titled "A TRICHROMATIC LASER SOURCE AND LASER PROJECTION APPARATUS", Chinese Patent Application No. 201810219611.3, filed on March 16, 2018, titled "A TRICHROMATIC LASER SOURCE AND LASER PROJECTION APPARATUS", Chinese Patent Application No. 201820361401.3, filed on March 16, 2018, titled "A TRICHROMATIC LASER SOURCE".

### TECHNICAL FIELD

The present disclosure relates to the field of laser source technologies, and more particularly to a laser projection apparatus.

### BACKGROUND

A laser source of a laser projection apparatus emits a blue laser beam. The blue laser beam is incident onto a fluorescent wheel to excite green phosphors and yellow phosphors in the fluorescent wheel to generate green light and yellow light, respectively. Then, the yellow light is filtered to get red light.

WO2015149877A1 provides a light beam projecting arrangement comprising: a first cluster of light sources arranged to provide a first cluster of light beams having a first etendue and a second cluster of light sources arranged to provide a second cluster of light beams having a second etendue, and means for changing the direction of the first cluster and/or the second cluster of light beams; wherein the light sources are arranged so that the total etendue of the first cluster of light beams is substantially equal to the etendue of the second cluster of light beams; and wherein the means for changing the direction are arranged so that the clusters of light beams are brought into a combined cluster light beam having substantially the same etendue as the larger one of the first etendue and the second etendue.

US9116421B1 discloses an optical system has projector optics aligned on a projection axis that is orthogonal to an offset axis. A first laser is positioned in a first plane orthogonal to the projection axis. First folding optics are positioned in the first plane to fold a first beam from the first laser to a first portion of the projector optics. A second laser is in a second plane parallel to, and offset along the offset axis from, the first plane. Second folding optics is positioned in the second plane to fold a second beam from the second laser to a second portion of the projector optics to synthesize the first and second beam.

US2014/0354956A1 discloses a light source device. The light source device includes a first light source that emits light of a first polarization, and a second light source that emits light of a second polarization whose polarization direction is different from the light of the first polarization by 90 degrees. A combined wavelength band of the light of the first polarization and the light of the second polarization is a first wavelength band. A third light source emits light of a third polarization and of a wavelength band which is different from the first wavelength band, and a fourth light source emits light of a fourth polarization whose polarization direction is different from the light of the third polarization by 90 degrees. A combined wavelength band of the light of the third polarization and the light of the fourth polarization is a second wavelength band which is different from the first wavelength band. A reflecting element reflects the light of the first polarization. A first selective transmission element transmits the light of the first polarization and reflects the light of the second polarization based on the polarization direction of the light. A second selective transmission element transmits combined light of the light of the first polarization and the light of the second polarization, and reflects the light of the third polarization based on the wavelength band of the light. A third selective transmission element transmits the combined light of the light of the first polarization and the light of the second polarization based on the polarization of the wavelength band, transmits the light of the third polarization and reflects the light of the fourth polarization based on the polarization direction of the light. The light of the first polarization, the light of the second polarization and the light of the third polarization passing through the third selective transmission element, and the light of the fourth polarization reflected by the third selective transmission element proceed in the same direction.

### SUMMARY

In one aspect, a laser projection apparatus includes first through fourth laser arrays, first and second light-combining components, and a beam-combining component. The first laser array is configured to emit first laser beams of a first color. The second laser array is configured to emit second laser beams of the first color. The first light-combining component is configured to make the first laser beams and the second laser beams advance along a first direction. The first laser array and the second laser array are arranged perpendicular to each other, and the first light-combining component is configured to transmit the first laser beams and reflect the second laser beams. The third laser array is configured to emit third laser beams of a second color. The fourth laser array configured to emit fourth laser beams of a third color.

The second light-combining component configured to make the third laser The third laser array and the fourth laser array are arranged perpendicular to each other, and the second light-combining component is configured to transmit the third laser beams and reflect the fourth laser beams. beams and the fourth laser beams advance along a second direction. The beam-combining component located on an optical path of the first laser beams and the second laser beams emitted from the first light-combining component, located on an optical path of the third laser beams and the fourth laser beams emitted from the second light-combining component, and configured to make the first laser beams and the second laser beams emitted from the first light-combining component and the third laser beams and the fourth laser beams emitted from the second light-combining component advance along a third direction. The first color, the second color and the third color are different from each other, and each of the first color, the second color and the third color is one of a red, green and blue color.

### BRIEF DESCRIPTION OF THE DRAWINGS

In order to describe technical solutions in embodiments of the present disclosure, the accompanying drawings to be used in the description of embodiments will be introduced briefly. Obviously, the accompanying drawings to be described below are merely some embodiments of the present disclosure, and a person of ordinary skill in the art can obtain other drawings according to those drawings without paying any creative effort.
Fig. 1 is a schematic diagram of a laser projection apparatus in the related art;
Fig. 2 is a schematic diagram of a laser projection apparatus including a first light-combining component and a second light-combining component according to some embodiments of the present disclosure;
Fig. 3 is a schematic diagram of a first light-combining component according to some embodiments of the present disclosure;
Fig. 4 is a schematic diagram of a second light-combining component according to some embodiments of the present disclosure;
Fig. 5 is a schematic diagram of another laser projection apparatus including a first light-combining component and a second light-combining component according to some embodiments of the present disclosure;
Fig. 6 is a schematic diagram of further another laser projection apparatus including a first light-combining component and a second light-combining component according to some embodiments of the present disclosure;
Fig. 7 is a schematic diagram of yet another laser projection apparatus including a first light-combining component and a second light-combining component according to some embodiments of the present disclosure;
Fig. 8 is a schematic diagram of a laser projection apparatus including a first light-combining component, a second light-combining component and a third light-combining component according to some embodiments of the present disclosure;
Fig. 9 is a schematic diagram of a third light-combining component according to some embodiments of the present disclosure;
Fig. 10 is a schematic diagram of another laser projection apparatus including a first light-combining component, a second light-combining component and a third light-combining component according to some embodiments of the present disclosure;
Fig. 11 is a schematic diagram of further another laser projection apparatus including a first light-combining component, a second light-combining component and a third light-combining component according to some embodiments of the present disclosure;
Fig. 12 is a schematic diagram of yet another laser projection apparatus including a first light-combining component, a second light-combining component and a third light-combining component according to some embodiments of the present disclosure;
Fig. 13 is a schematic diagram of yet still another laser projection apparatus including a first light-combining component, a second light-combining component and a third light-combining component according to some embodiments of the present disclosure;
Fig. 14 is a schematic diagram of another second light-combining component according to some embodiments of the present disclosure;
Fig. 15 is a schematic diagram of another third light-combining component according to some embodiments of the present disclosure;
Fig. 16 is a schematic diagram of yet still another laser projection apparatus including a first light-combining component, a second light-combining component and a third light-combining component according to some embodiments of the present disclosure;
Fig. 17 is a schematic diagram of yet still further another laser projection apparatus including a first light-combining component, a second light-combining component and a third light-combining component according to some embodiments of the present disclosure;
Fig. 18 is a schematic diagram of yet still further another laser projection apparatus including a first light-combining component, a second light-combining component and a third light-combining component according to some embodiments of the present disclosure;
Fig. 19 is a cross section diagram of a fly-eye lens according to some embodiments of the present disclosure; and
Fig. 20 is a schematic diagram of another laser projection apparatus according to some embodiments of the present disclosure.

### DETAILED DESCRIPTION

Embodiments of the present disclosure will be described in detail with reference to the accompanying drawings to make the objectives, technical solutions and the advantages of the present disclosure more clearly. Obviously, the described embodiments are merely some but not all of embodiments of the present disclosure. All other embodiments made on the basis of the embodiments of the present disclosure by a person of ordinary skill in the art without paying any creative effort shall be included in the protection scope of the present disclosure.

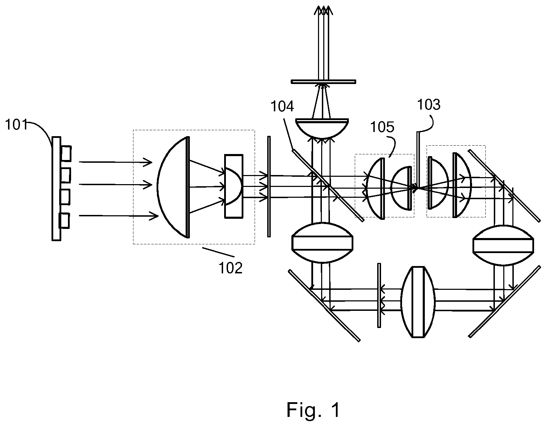

In the related art, as shown in Fig. 1, a laser array 101 emits blue laser beams, which reach a dichroic mirror 104 after passing through a beam-shrinking system 102, and then reach a focusing and collimating lens group 105 after passing through the dichroic mirror 104.The beams emitted from the focusing and collimating lens group 105 reach a fluorescent wheel 103 to excite the fluorescent wheel 103 to emit a fluorescence. Here the fluorescent wheel 103 is, for example, a reflective fluorescent wheel (including a fluorescent region and a transmission region). The fluorescent region of the fluorescent wheel 103 is excited by the laser beams to emit the fluorescence, and then the fluorescence is reflected by the fluorescent wheel 103. The reflected fluorescence is converged and collimated by the focusing and collimating lens group 105, and thus large-angle beams with a Lambertian body (which refers to that the radiation brightness of a radiation source in all directions keeps unchanged and the change of the radiation intensity over an angle between the observation direction and the normal of the surface light source obey Cosine Law) distribution are compressed into approximately parallel beams, which are then emitted to the dichroic mirror 104. The dichroic mirror 104 reflects the fluorescence to a light stick. In addition, the blue laser beams are transmitted to the dichroic mirror 104 via a "blue laser beam loop" after passing through the aforementioned transmission region, pass through the dichroic mirror, and finally enter the light stick.

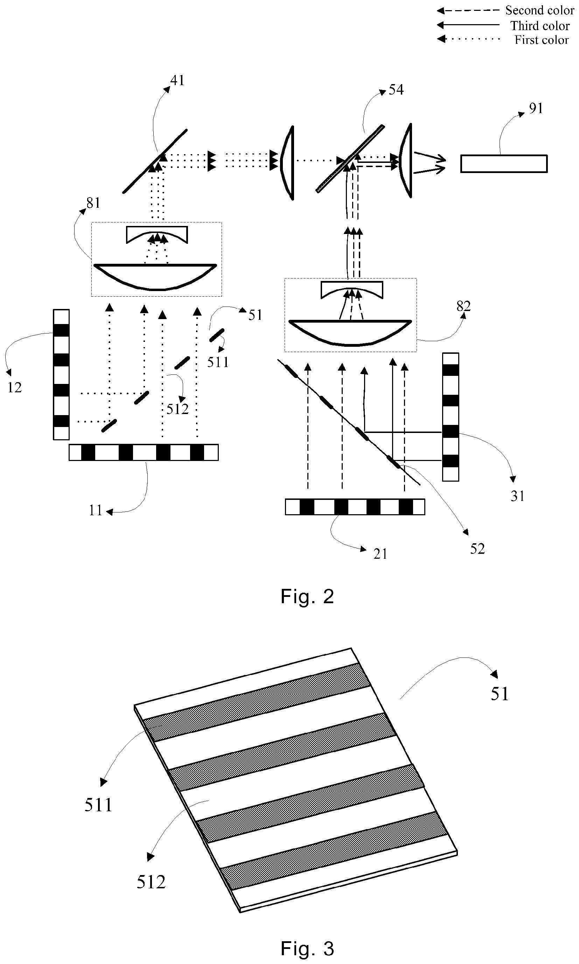

Some embodiments of the present disclosure provide a laser projection apparatus. As shown in Fig. 2, the laser projection apparatus includes a first laser array 11, a second laser array 12, a third laser array 21, a fourth laser array 31, a first light-combining component 51, a second light-combining component 52 and a beam-combining component 54. The first laser array 11 is configured to emit first laser beams of a first color. The second laser array 12 is configured to emit second laser beams of the first color. The third laser array 21 is configured to emit third laser beams of a second color. The fourth laser array 31 is configured to emit fourth laser beams of a third color. The first light-combining component 51 is configured to make the first laser beams and the second laser beams advance along a first direction. The second light-combining component 52 is configured to make the third laser beams and the fourth laser beams advance along a second direction. The beam-combining component 54 is located on an optical path of the first laser beams and the second laser beams emitted from the first light-combining component 51, and is located on an optical path of the third laser beams and the fourth laser beams emitted from the second light-combining component 52. The beam-combining component 54 is configured to make the first laser beams and the second laser beams emitted from the first light-combining component 51, and the third laser beams and the fourth laser beams emitted from the second light-combining component 52 advance along a third direction. The first color, the second color and the third color are different from each other, and each of the first color, the second color and the third color is one of red, green and blue.

In the laser projection apparatus of the embodiments of the present disclosure, two laser arrays for emitting the laser beams of the first color and one light-combining component for combining the laser beams are provided. In addition, the third laser array for emitting the third laser beams of the second color, the fourth laser array for emitting the fourth laser beams of the third color, and one light-combining component for combining the third laser beams and the fourth laser beams are provided. Since a plurality of laser arrays are used, a projection brightness of the laser projection apparatus is improved. Furthermore, since laser beams emitted by the plurality of laser arrays are combined by the light-combining components, a volume of the laser projection apparatus is smaller.

In some embodiments, the first direction is the same as the second direction, and is different from the third direction. In some other embodiments, the first direction is different from the second direction, and is the same as the third direction. In some other embodiments, the first direction, the second direction and the third direction are all different from each other. The first direction, the second direction, and the third direction can also have other relationships thereamong, which are not limited herein.

In some embodiments, the first color is green, the second color is red, and the third color is blue.

The laser projection apparatus is illustrated below by taking the laser projection apparatus including the first light-combining component 51 and the second light-combining component 52 as an example.

In the invention, as shown in Fig. 2, the first laser array 11 and the second laser array 12 are arranged perpendicular to each other. That is, a plane in which first lasers of the first laser array 11 are arranged and a plane in which second lasers of the second laser array 12 are arranged are arranged perpendicular to each other. In addition, the first light-combining component 51 is configured to transmit the first laser beams and reflect the second laser beams. In this way, more first and second lasers are arranged in a limited space, and thus the power of the laser beams of the first color is increased.

It will be noted that, in order to combine the first laser beams and the second laser beams, the first light-combining component 51 is inclined relative to the first laser array 11 and the second laser array 12, that is, a surface of the first light-combining component 51 adjacent to the first laser array 11 is inclined relative to the plane in which the lasers of the first laser array 11 are arranged. The angle of inclination of the first light-combining component 51 relative to the first laser array 11 is such that the first light-combining component 51 can transmit the first laser beams and reflect the second laser beams along a first direction.

In some embodiments, as shown in Fig. 3, the first light-combining component 51 includes a plurality of first reflection parts 511 and a plurality of first transmission parts 512. The plurality of first reflection parts 511 are located on outgoing optical paths of the second laser beams, and are configured to reflect the second laser beams. The plurality of first transmission parts 512 are located on outgoing optical paths of the first laser beams, and are configured to transmit the first laser beams. In some embodiments, the plurality of first reflection parts 511 and the plurality of first transmission parts 512 are alternately arranged. The number of the plurality of first reflection parts 511 is not limited, and is determined according to the number of and the arrangement way of the second lasers in the second laser array 12. The number of the plurality of first transmission parts 512 is not limited, and is determined according to the number of and the arrangement way of the first lasers in the first laser array 11.

In some embodiments, the first light-combining component 51 includes a single first reflection part 511 and a single first transmission part 512. The first reflection part 511 is configured to reflect the second laser beams, and the first transmission part 512 is configured to transmit the first laser beams.

In some embodiments, as shown in Fig. 3, the first light-combining component 51 includes a glass substrate and one or more strips of reflective films that are plated at interval on a surface of the glass substrate away from the first laser array 11. The first reflection part 511 corresponds to a portion of the first light-combining component 51 having the strip of reflective film. In some examples, the first transmission part 512 corresponds to a portion of the first light-combining component 51 that does not have the strip of reflective film, and is configured to transmit laser beams with various colors. In some other embodiments, the portion of the first light-combining component 51 that does not have the strip of reflective film is removed or has an opening, and the first transmission part 512 corresponds to a hollow portion of the first light-combining component 51. In some other examples, the first light-combining component 51 includes a non-transparent substrate and one or more strips of reflective films that are plated at interval on a surface of the non-transparent substrate, and the portion of the first light-combining component 51 that does not have the strip of reflective film is removed or has an opening. The first reflection part 511 corresponds to the portion of the first light-combining component 51 having the strip of reflective film. The first transmission part 512 corresponds to a hollow portion of the first light-combining component 51.

In some embodiments, polarization directions of the first laser beams are perpendicular to polarization directions of the second laser beams, and the first light-combining component 51 is a dichroic element. The dichroic element transmits the first laser beams and reflects the second laser beams due to the difference between polarization directions of the first laser beams and the second laser beams.

In the invention, as shown in Fig. 2, the third laser array 21 and the fourth laser array 31 are arranged perpendicular to each other, that is, a plane in which third lasers of the third laser array 21 are arranged and a plane in which fourth lasers of the fourth laser array 31 are arranged are arranged perpendicular to each other. The second light-combining component 52 is inclined relative to the third laser array 21, and combines the third laser beams and the fourth laser beams. With this arrangement, an optical path of a laser beam of a fourth color needs not to be separately provided, thereby saving a space occupied by the optical path of the laser beam of the fourth color, and further reducing the volume of the laser projection apparatus.

It will be noted that, in order to combine the third laser beams and the fourth laser beams, the second light-combining component 52 is inclined relative to the third laser array 21 and the fourth laser array 31, that is, a surface of the second light-combining component 52 adjacent to the third laser array 21 is inclined relative to the plane in which the lasers of the third laser array 21 are arranged. The angle of inclination of the second light-combining component 52 relative to the third laser array 21 is such that the second light-combining component 52 can transmit the third laser beams and reflect the fourth laser beams along a second direction.

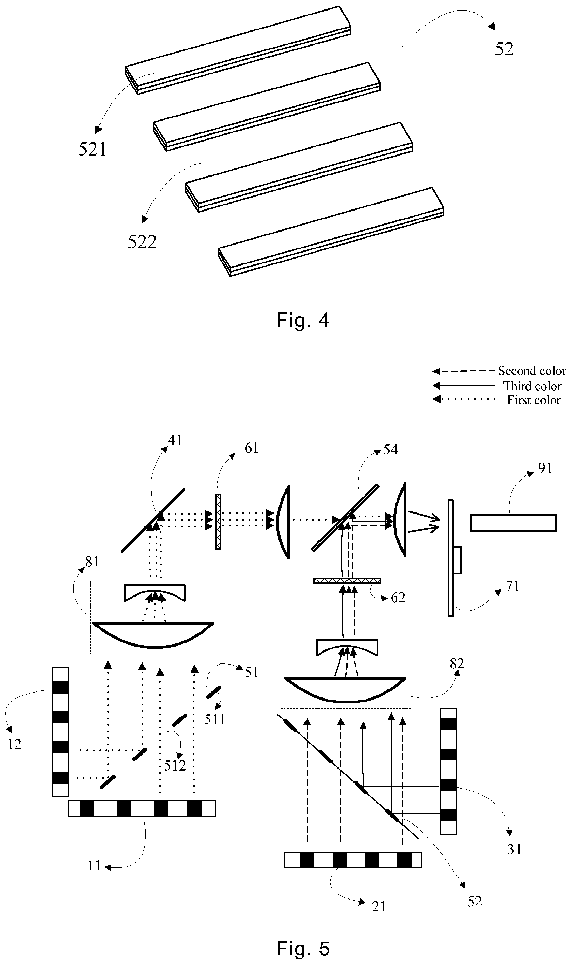

In some embodiments, as shown in Fig. 4, the second light-combining component 52 includes a plurality of second reflection parts 521 and a plurality of second transmission parts 522. The plurality of second reflection parts 521 are located on outgoing optical paths of the fourth laser beams, and are configured to reflect the fourth laser beams. The plurality of the second transmission parts 522 are located on the outgoing optical paths of the third laser beams, and are configured to transmit the third laser beams. In some embodiments, the plurality of second reflection parts 521 and the plurality of second transmission parts 522 are alternately arranged. The number of the plurality of second reflection parts 521 is not limited, and is determined according to the number of and the arrangement way of the fourth lasers in the fourth laser array 31. The number of the plurality of second transmission parts 522 is not limited, and is determined according to the number of and the arrangement way of the third lasers in the third laser array 21.

In some embodiments, the second light-combining component 52 includes a single second reflection part 521 and a single second transmission part 522. The second reflection part 521 is configured to reflect the fourth laser beams, and the second transmission part 522 is configured to transmit the third laser beams.

In some embodiments, the second light-combining component 52 includes a glass substrate and one or more strips of reflective films that are plated at interval on a surface of the glass substrate away from the third laser array 21. The second reflection part 521 corresponds to a portion of the second light-combining component 52 having the strip of reflective film. In some examples, the second transmission part 522 corresponds to a portion of the second light-combining component 52 that does not have the strip of reflective film, and is configured to transmit laser beams with various colors. In some other embodiments, the portion of the second light-combining component 52 that does not have the strip of reflective film is removed or has an opening, and the second transmission part 522 corresponds to a hollow portion of the second light-combining component 52. In some other examples, as shown in Fig. 4, the second light-combining component 52 includes a non-transparent substrate and one or more strips of reflective films that are plated at interval on a surface of the non-transparent substrate, and the portion of the second light-combining component 52 that does not have the strip of reflective film is removed or has an opening. The second reflection part 521 corresponds to the portion of the second light-combining component 52 having the strip of reflective film. The second transmission part 522 corresponds to a hollow portion of the second light-combining component 52.

In some embodiments, the second light-combining component 52 is a dichroic element, and is configured to transmit the third laser beams and reflect the second laser beams by using the principle that the wavelengths of the third laser beams and the fourth laser beams are different.

In some embodiments, a power P1 of the fourth laser array 31 ranges from 50W to 85W. A power P2 of the third laser array 21 ranges from 45W to 75W. A sum P3 of a power of the first laser array 11 and a power of the second laser array 12 ranges from 25W to 50W. In some examples, the power of the first laser array 11 is equal to the power of the second laser array 12. In some other embodiments, the difference between the power of the first laser array 11 and the power of the second laser array 12 does not exceed 10 W.

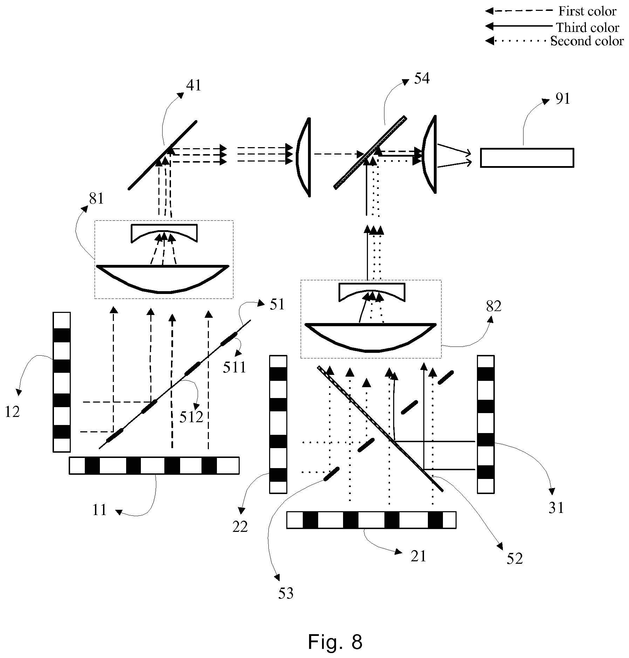

In some embodiments, as shown in Fig. 8, the laser projection apparatus includes the first laser array 11, the second laser array 12, the third laser array 21, the fourth laser array 31, a fifth laser array 22, the first light-combining component 51, the second light-combining component 52, a third light-combining component 53 and the beam-combining component 54. The first laser array 11 is configured to emit the first laser beams of the first color, the second laser array 12 is configured to emit the second laser beams of the first color, the third laser array 21 is configured to emit the third laser beams of the second color, the fourth laser array 31 is configured to emit the fourth laser beams of the third color, and the fifth laser array 22 is configured to emit fifth laser beams of the second color. The first light-combining component 51 is configured to make the first laser beams and the second laser beams advance along the first direction. The third light-combining component 53 is configured to, together with the second light-combining component 52, make the third laser beams, the fourth laser beams and the fifth laser beams advance along the second direction. The beam-combining component 54 is located on an optical path of the first laser beams and the second laser beams emitted from the first light-combining component 51, and is located on an optical path of the third laser beams, the fourth laser beams and the fifth laser beams emitted from the second light-combining component 52 and the third light-combining component 53. The beam-combining component 54 is configured to make the first laser beams, the second laser beams that are emitted from the first light-combining component 51, and the third laser beams, the fourth laser beams and the fifth laser beams that are emitted from the second light-combining component 52 and the third light-combining component 53 advance along a third direction.

In the laser projection apparatus provided by the embodiments of the present disclosure, two laser arrays for emitting the laser beams of the first color and one light-combining component for combining the laser beams are provided. In addition, one fourth laser array, two laser arrays for emitting the laser beams of the second color, and two light-combining components for combining the laser beams are provided. Since a plurality of laser arrays are used, the projection brightness of the laser projection apparatus is improved. Furthermore, since laser beams emitted by the plurality of laser arrays are combined by the light-combining components, the volume of the laser projection apparatus is smaller.

The arrangements of the first direction, the second direction and the third direction refer to the aforementioned description, which will not be repeated here.

In some embodiments, the first color is red, the second color is green, and the third color is blue. In some other embodiments, the first color is green, the second color is red, and the third color is blue.

The laser projection apparatus is illustrated below by taking the laser projection apparatus including the first light-combining component 51, the second light-combining component 52 and the third light-combining component 53 as an example.

The structures and arrangements of the first laser array 11, the second laser array 12 and the first light-combining component 51 please refer to the aforementioned related description, which will not be repeated here.

In some embodiments, as shown in Fig. 8, the third laser array 21 and the fourth laser array 31 are arranged perpendicular to each other, the third laser array 21 and the fifth laser array 22 are arranged perpendicular to each other, and the fourth laser array 31 and the fifth laser array 22 are arranged opposite to each other. The second light-combining component 52 and the third light-combining component 53 are arranged in an X type. For example, the second light-combining component 52 and the third light-combining component 53 are located across each other between the fourth laser array 31 and the fifth laser array 22. The second light-combining component 52 is configured to transmit the third laser beams and the fifth laser beams, and reflect the fourth laser beams. The third light-combining component 53 is configured to transmit the third laser beams and the fourth laser beams, and reflect the fifth laser beams.

In some embodiments, the second light-combining component 52 is perpendicular to the third light-combining component 53. In some other embodiments, the second light-combining component 52 is non-perpendicular to the third light-combining component 53. The third laser beams, the fourth laser beams and the fifth laser beams are combined by the second light-combining component 52 and the third light-combining component 53, and thus more lasers for emitting the laser beams of the second color are arranged in the limited space to increase the power of the laser beams of the second color. Meanwhile, the laser beams of the second color and the laser beams of the third color are combined, and thus the optical path of a laser beam of the third color needs not to be separately provided, so that a space occupied by the optical path of the laser beam of the third color is saved, and the volume of the laser projection apparatus is further reduced.

It will be noted that, in order to combine the third laser beams, the fourth laser beams and the fifth laser beams, the second light-combining component 52 and the third light-combining component 53 are inclined relative to the fourth laser array 31, that is, surfaces of the second light-combining component 52 and the third light-combining component 53 adjacent to the fourth laser array 31 are inclined relative to a plane in which the fourth lasers of the fourth laser array 31 are arranged. Angles of inclination of the second light-combining component 52 and the third light-combining component 53 relative to the fourth laser array 31 is such that the second light-combining component 52 can transmit the third laser beams and the fifth laser beams and reflect the fourth laser beams, and the third light-combining component 53 can transmit the third laser beams and the fourth laser beams and reflect the fifth laser beams along a same direction.

The structure and material of the second light-combining component 52 please refer to the aforementioned related contents, which will not be repeated here.

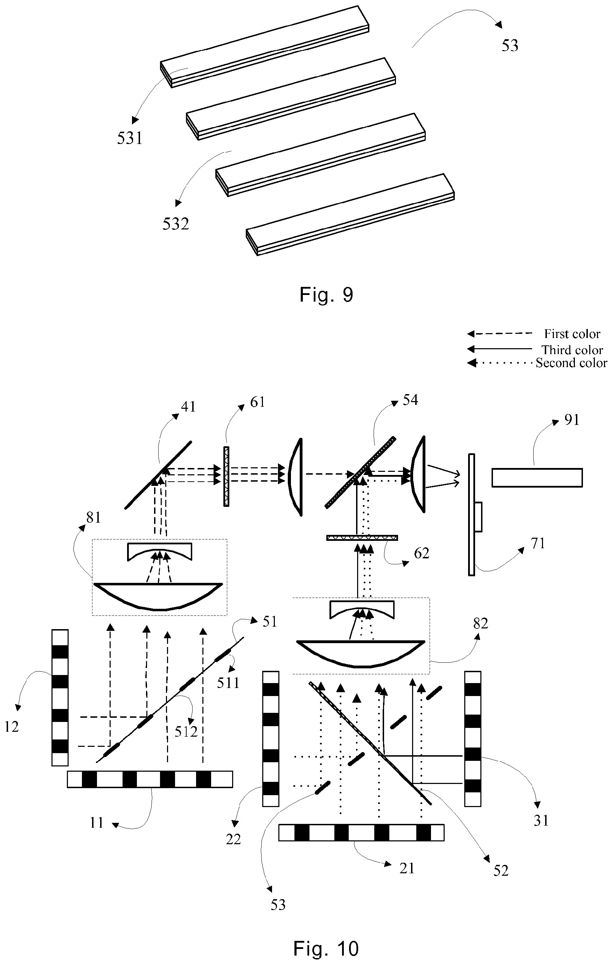

In some embodiments, as shown in Fig. 9, the third light-combining component 53 includes a plurality of third reflection parts 531 and a plurality of third transmission parts 532. The plurality of third reflection parts 531 are located on outgoing optical paths of the fifth laser beams, and are configured to reflect the fifth laser beams. The plurality of third transmission parts 532 are located on outgoing optical paths of the third laser beams, and are configured to transmit the third laser beams and the fourth laser beams which have been reflected by the second light-combining component 52. In some embodiments, the plurality of third reflection parts 531 and the plurality of third transmission parts 532 are alternately arranged. The number of the plurality of third reflection parts 531 is not limited, and is determined according to the number of and the arrangement way of the fifth lasers in the fifth laser array 22. The number of the plurality of third transmission parts 532 is not limited, and is determined according to the number of and the arrangement way of the third lasers in the third laser array 21 and the fourth lasers in the fourth laser array 31.

In some embodiments, the third light-combining component 53 includes a single third reflection part 531 and a single third transmission part 532. The third reflection part 531 is configured to reflect the fifth laser beams. The third transmission part 532 is configured to transmit the third laser beams and the fourth laser beams which have been reflected by the second light-combining component 52.

In some embodiments, the third light-combining component 53 includes a glass substrate and one or more strips of reflective films that are plated at interval on a surface of the glass substrate away from the third laser array 21. The third reflection part 531 corresponds to a portion of the third light-combining component 53 having the strip of reflective film. In some embodiments, the third transmission part 532 corresponds to a portion of the third light-combining component 53 that does not have the strip of reflective film, and is configured to transmit beams with various colors. In some other embodiments, the portion of the third light-combining component 53 that does not have the strip of reflective film is removed or has an opening, and the third transmission part 532 corresponds to a hollow portion of the third light-combining component 53. In some other embodiments, as shown in Fig. 9, the third light-combining component 53 includes an non-transparent substrate and one or more strips of reflective films that are plated at interval on the non-transparent substrate, and the portion of the third light-combining component 53 that does not have the strip of reflective film is removed or has an opening. The third reflection part 531 corresponds to a portion of the third light-combining component 53 having the strip of reflective film. The third transmission part 532 corresponds to a hollow portion of the third light-combining component 53.

In some embodiments, the second light-combining component 52 is assembled with the third light-combining component 53 by passing the second light-combining component 52 through the hollow portion provided in a central area of the third light-combining component 53. In some embodiments, the second light-combining component 52 includes two portions with the same size. The third light-combining component 53 is sandwiched between the two portions so that the third-combing component and the two portions are assembled together.

In some embodiments, a power P1 of the fourth laser array 31 ranges from 50W to 85W. A sum P2 of a power of the first laser array 11 and a power of the second laser array 12 ranges from 65W to 95W. In some embodiments, the power of the first laser array 11 is equal to the power of the second laser array 12. In some other embodiments, the difference between the power of the first laser array 11 and the power of the second laser array 12 does not exceed 15 W. A sum P3 of a power of the third laser array 21 and a power of the fifth laser array 22 ranges from 25W to 55W. In some embodiments, the power of the third laser array 21 is equal to the power of the fifth laser array 22. In some other embodiments, the difference between the power of the third laser array 21 and the power of the fifth laser array 22 does not exceed 10 W.

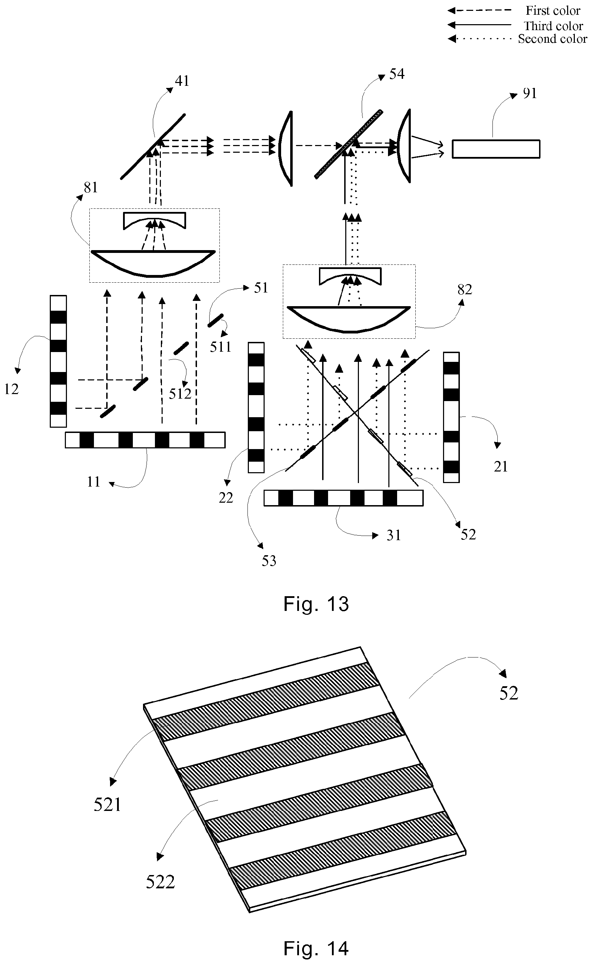

In some embodiments, as shown in Fig. 13, the laser projection apparatus includes a first laser array 11, a second laser array 12, a third laser array 21, a fourth laser array 31, a fifth laser array 22, a first light-combining component 51, a second light-combining component 52, a third light-combining component 53 and a beam-combining component 54. The first laser array 11 is configured to emit first laser beams of a first color, the second laser array 12 is configured to emit second laser beams of the first color, the third laser array 21 is configured to emit third laser beams of a second color, the fourth laser array 31 is configured to emit fourth laser beams of a third color, and the fifth laser array 22 is configured to emit fifth laser beams of the second color. The first light-combining component 51 is configured to make the first laser beams and the second laser beams advance along a first direction. The third light-combining component 53 is configured to, together with the second light-combining component 52, make the third laser beams, the fourth laser beams and the fifth laser beams advance along the second direction. The beam-combining component 54 is located on an optical path of the first laser beams and the second laser beams which are emitted from the first light-combining component 51, and is located on an optical path of the third laser beams, the fourth laser beams and the fifth laser beams which are emitted from the second light-combining component 52 and the third light-combining component 53. The beam-combining component 54 is configured to make the first laser beams and the second laser beams which are emitted from the first light-combining component 51, and the third laser beams, the fourth laser beams and the fifth laser beams which are emitted from the second light-combining component 52 and the third light-combining component 53 advance along the third direction.

In the laser projection apparatus provided by the embodiments of the present disclosure, two laser arrays for emitting the laser beams of the first color and one light-combining component for combining the laser beams are provided. In addition, the fourth laser array, two laser arrays which emit the laser beams of the second color and two light-combining components for combining the laser beams are provided. Since a plurality of laser arrays are used, the projection brightness of the laser projection apparatus is improved. Furthermore, since the laser beams emitted from the plurality of laser arrays are combined by the light-combining components, the volume of the laser projection apparatus is smaller.

The arrangements of the first direction, the second direction and the third direction refer to the aforementioned description, which will not be repeated here.

In some embodiments, the first color is red, the second color is green, and the third color is blue. In some embodiments, polarization directions of the third laser beams and the fifth laser beams are perpendicular to each other.

The laser projection apparatus is illustrated below by taking the laser projection apparatus including the first light-combining component 51, the second light-combining component 52 and the third light-combining component 53 as an example.

The structures and arrangements of the first laser array 11, the second laser array 12 and the first light-combining component 51 please refer to the aforementioned related description, which will not be repeated here.

In some embodiments, as shown in Fig. 13, the third laser array 21 and the fourth laser array 31 are arranged perpendicular to each other, the fifth laser array 22 and the fourth laser array 31 are arranged perpendicular to each other, and the third laser array 21 and the fifth laser array 22 are arranged opposite to each other. The second light-combining component 52 and the third light-combining component 53 are arranged in an X type. For example, the second light-combining component 52 and the third light-combining component 53 are located across each other between the third laser array 21 and the fifth laser array 22. The second light-combining component 52 is configured to transmit the fourth laser beams and the fifth laser beams, and reflect the third laser beams. The third light-combining component 53 is configured to transmit the third laser beams and the fourth laser beams, and reflect the fifth laser beams.

In some embodiments, the second light-combining component 52 is perpendicular to the third light-combining component 53. In some other embodiments, the second light-combining component 52 is non-perpendicular to the third light-combining component 53. The third laser beams, the fourth laser beams and the fifth laser beams are combined by the second light-combining component 52 and the third light-combining component 53, and thus more lasers for emitting the laser beams of the second color are arranged in the limited space to increase the power of the laser beams of the second color. Meanwhile, the laser beams of the second color and the laser beams of the third color are combined, and the optical path of a laser beam of the third color needs not to be separately provided, so that the space occupied by the optical path of the laser beam of the third color is saved, and the volume of the laser projection apparatus is further reduced.

It will be noted that, in order to combine the third laser beams, the fourth laser beams and the fifth laser beams, the second light-combining component 52 and the third light-combining component 53 are inclined relative to the fourth laser array 31, that is, surfaces of the second light-combining component 52 and the third light-combining component 53 adjacent to the fourth laser array 31 are inclined relative to a plane in which the fourth lasers of the fourth laser array 31 are arranged. The angles of inclination of the second light-combining component 52 and the third light-combining component 53 relative to the fourth laser array 31 are such that the second light-combining component 52 can transmit the fourth laser beams and the fifth laser beams and reflect the third laser beams, and the third light-combining component 53 can transmit the third laser beams and the fourth laser beams and reflect the fifth laser beams along a same direction.

In some embodiments, as shown in Fig. 14, the second light-combining component 52 includes a plurality of second reflection parts 521 and a plurality of second transmission parts 522. The plurality of second reflection parts 521 are located on outgoing optical paths of the third laser beams, and are configured to reflect the third laser beams. The plurality of second reflection parts 521 are also at least partially located on outgoing optical paths of the fifth laser beams which has been reflected by the third light-combining component 53, and are configured to transmit the fifth laser beams. The plurality of second transmission parts 522 are located on outgoing optical paths of the fourth laser beams, and are configured to transmit the fourth laser beams. In some embodiments, the plurality of second reflection parts 521 and the plurality of second transmission parts 522 are alternately arranged. The number of the plurality of second reflection parts 521 and the number of the plurality of second transmission parts 522 are not limited, and are determined according to the number of and the arrangement way of the lasers in the third laser array 21, the fourth laser array 31 and the fifth laser array 22.

In some embodiments, the second light-combining component 52 includes a single second reflection part 521 and a single second transmission part 522. The second reflection part 521 is configured to reflect the third laser beams. The second transmission part 522 is configured to transmit the fourth laser beams and the fifth laser beams.

In some embodiments, the third laser beams are S-polarized laser beams, the fifth laser beams are P-polarized laser beams, and polarization directions of the S-polarized laser beams are perpendicular to polarization directions of the P-polarized laser beams. In some embodiments, as shown in Fig. 14, the second light-combining component 52 includes the glass substrate and stripes of first polarizing films located at interval on a surface of the glass substrate away from the fourth laser array 31. The first polarizing films are configured to reflect the S-polarized laser beams (the third laser beams) and transmit the P-polarized laser beams (the fifth laser beams). The second reflection part 521 corresponds to a portion of the second light-combining component 52 having the first polarizing film. In some embodiments, the second transmission part 522 corresponds to a portion of the second light-combining component 52 that does not have the first polarizing films, and is configured to transmit beams with various colors. In some other embodiments, the portion of the second light-combining component 52 that does not have the first polarizing film is removed or has an opening, and the second transmission part 522 corresponds to a hollow portion of the second light-combining component 52.

In some embodiments, as shown in 15, the third light-combining component 53 includes a plurality of third reflection parts 531 and a plurality of third transmission parts 532. The plurality of third reflection parts 531 are located on outgoing optical paths of the fifth laser beams, and are configured to reflect the fifth laser beams. The plurality of third reflection parts are also at least partially located on the outgoing optical paths of the third laser beams which has been reflected by the second light-combining component 52, and are configured to transmit the third laser beams. The plurality of third transmission parts 532 are located on outgoing optical paths of the fourth laser beams, and are configured to transmit the fourth laser beams. In some embodiments, the plurality of third reflection parts 531 and the plurality of third transmission parts 532 are alternately arranged. The number of the plurality of third reflection parts 531 and the number of the third transmission parts 532 are determined according to the number and arrangement ways of the fourth laser array 31, the third laser array 21 and the fifth laser array 22.

In some embodiments, the third light-combining component 53 includes a single third reflection part 531 and a single third transmission part 532. The third reflection part 531 is configured to reflect the fifth laser beams. The third transmission part 532 is configured to transmit the third laser beams and the fourth laser beams.

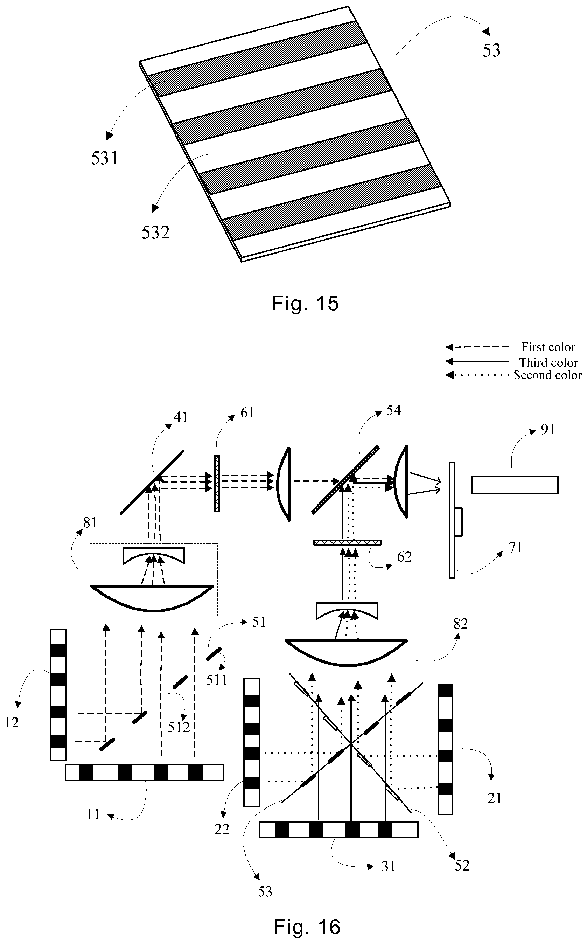

In some embodiments, the third laser beams are S-polarized laser beams, the fifth laser beams are P-polarized laser beams, and polarization directions of the S-polarized laser beams are perpendicular to polarization directions of the P-polarized laser beams. In some embodiments, as shown in Fig. 15, the third light-combining component 53 includes the glass substrate and stripes of second polarizing films located at interval on a surface of the glass substrate away from the fourth laser array 31. The second polarizing films are configured to reflect the P-polarized laser beams (the fifth laser beams) and transmit the S-polarized laser beams (the third laser beams). The third reflection part 531 corresponds to a portion of the third light-combining component 53 having the second polarizing film. In some embodiments, the third transmission part 532 corresponds to a portion of the third light-combining component 53 that does not have the second polarizing film, and is configured to transmit beams with various colors. In some other embodiments, the portion of the third light-combining component 53 that does not have the second polarizing film is removed or has an opening, and the third transmission part 532 corresponds to a hollow portion of the third light-combining component 53.

In some embodiments, the second light-combining component 52 is assembled with the third light-combining component 53 by passing the second light-combining component 52 through the hollow portion in a central area of the third light-combining component 53. In some embodiments, the second light-combining component 52 includes two portions with the same size. The third light-combining component 53 is sandwiched between the two portions so that the third light-combining component 53 and the two portions are assembled together.

In some embodiments, a power P1 of the fourth laser array 31 ranges from 50W to 85W. A sum P2 of a power of the first laser array 11 and a power of the second laser array 12 ranges from 65W to 95W. In some embodiments, the power of the first laser array 11 is equal to the power of the second laser array 12. In some other embodiments, a difference between the power of the first laser array 11 and the power of the second laser array 12 does not exceed 15 W. A sum P3 of a power of the third laser array 21 and a power of the fifth laser array 22 ranges from 25W to 55W. In some embodiments, the power of the third laser array 21 is equal to the power of the fifth laser array 22. In some other embodiments, a difference between the power of the third laser array 21 and the power of the fifth laser array 22 does not exceed 10 W.

In some embodiments, as shown in Fig. 16, the second light-combining component 52 includes a plurality of second reflection parts 521 and a plurality of second transmission parts 522. The plurality of second reflection parts 521 are located on outgoing optical paths of the third laser beams, and are configured to reflect the third laser beams. The plurality of second transmission parts 522 are located on outgoing optical paths of the fourth laser beams, and are configured to transmit the fourth laser beams. The plurality of second transmission parts 522 are also at least partially located on outgoing optical paths of the fifth laser beams which have been reflected by the third light-combining component 53, and are configured to transmit the fifth laser beams.

The structure of the second light-combining component 52 is, for example, the structure of the second light-combining component 52 described with reference to Fig. 4, the structure of the second light-combining component 52 described with reference to Fig. 14, or the aforementioned other structures of the second light-combining component 52, which will not be repeated here.

In some embodiments, as shown in 16, the third light-combining component 53 includes a plurality of third reflection parts 531 and a plurality of third transmission parts 532. The plurality of third reflection parts 531 are located on outgoing optical paths of the fifth laser beams, and are configured to reflect the fifth laser beams. The plurality of third transmission parts 532 are located on outgoing optical paths of the fourth laser beams, and are configured to transmit the fourth laser beams. The plurality of third transmission parts 532 are also at least partially located on outgoing optical paths of the third laser beams which have been reflected by the second light-combining component 52, and are configured to transmit the third laser beams.

The structure of the third light-combining component 53 is, for example, the structure of the third light-combining component 53 described with reference to Fig. 9, the structure of the third light-combining component 53 described with reference to Fig. 15, or the aforementioned other structures of the third light-combining component 53, which will not be repeated here.

In some embodiments, as shown in Fig. 2, Fig. 8 and Fig. 13, the laser projection apparatus further includes a light homogenizing component 91, and the light homogenizing component 91 is configured to receive laser beams emitted from the beam-combining component 54.

In some embodiments, as shown in Fig. 2, Fig. 8 and Fig. 13, the laser projection apparatus further includes a reflection element 41 located between the first light-combining component 51 and the beam-combining component 54. The reflection element 41 is configured to reflect the first laser beams and the second laser beams emitted from the first light-combining component 51 so as to turn the first laser beams and the second laser beams emitted from the first light-combining component 51 a preset angle θ, where 60°≤θ≤125°. For example, θ is 65°, 70°, 80°, 95°, 100°, 110°, or 120°. In some embodiments, θ is 90°, that is, an angle between the reflection element 41 and a principal optic axis of the first and second laser beams emitted from the first light-combining component 51 is 45°. Due to the deflection of the reflection element 41, the optical path distance of the first laser beams and the second laser beams in a horizontal direction in Fig. 2 is greatly shortened, facilitating the reduction of the volume of the laser projection apparatus.

In some embodiments, the reflection element 41 is a plane mirror. In some embodiments, an angle between the plane mirror and the principal optic axis of the first and second laser beams emitted from the first light-combining component 51 is α, where 25°≤α≤65°. For example, α is 30°, 40°, 45°, 55°, or 60°. In this way, the first laser beams and the second laser beams emitted from the first light-combining component 51 are turned by the plane mirror, and then enter the beam-combining component 54.

In some embodiments, an angle between the beam-combining component 54 and a principal optic axis of laser beams emitted from the second light-combining component 52 is β, where 25°≤β≤65°. For example, β is 30°, 40°, 45°, 55°, or 60°. In this way, the beam-combining component 54 transmits the first laser beams and the second laser beams emitted from the first light-combining component 51, and reflects the third laser beams and the fourth laser beams emitted from the second light-combining component 52. Therefore, the beam-combining component 54 not only combines the laser beams of three colors, but also turns the optical paths of the third laser beams and the fourth laser beams, so that the volume of the laser projection apparatus is reduced. In some embodiments, β=45°.

In some embodiments, the beam-combining component 54 deflects the optical paths of the first laser beams and the second laser beams. At this time, the first laser beams and the second laser beams emitted from the first light-combining component 51 reach the beam-combining component 54, and then are reflected to the light homogenizing component 91. Meanwhile, the laser beams emitted from the second light-combining component 52 reach the beams-combining element 54, and then is transmitted to the light homogenizing component 91. Under this case, the reflection element 41 is located between the second light-combining component 52 and the beam-combining element 54, and is configured to turn the optical paths of the third laser beams and the fourth laser beams.

In some embodiments, the beams-combining element 54 transmits the first laser beams and the second laser beams. At this time, the first laser beams and the second laser beams emitted from the first light-combining component 51 reach the reflection element 41, are reflected to the beam-combining component 54 by the reflection element 41, and pass through the beams combining component 54. Meanwhile, the laser beams emitted from the second light-combining component 52 reach the beams-combining element 54, and then is reflected to the beams homogenizing component 91.

In some embodiments, as shown in Fig. 2, Fig. 8 and Fig. 13, the laser projection apparatus further includes a first beams-shrinking lens group 81 located on the optical paths of the first laser beams and the second laser beams emitted from the first light-combining component 51, and the first beams-shrinking lens group 81 is configured to shrink the first laser beams and the second laser beams to reduce an area of a speckle, so that transmission efficiencies of the first laser beams and the second laser beams are increased. In some embodiments, the laser projection apparatus further includes a second beams-shrinking lens group 82 located on outgoing optical paths of the second light-combining component 52/the second light-combining component 52 and the third light-combining component 53, and the second beams-shrinking lens group 82 is configured to shrink the laser beams emitted from the light-combining component. In this way, not only the transmission efficiencies of the beams are increased, but also the diffusion efficiencies of the beams are increased due to the reduction of the area of the speckle illuminated by each beam to a diffusion component.

In some embodiments, as shown in Fig. 5, Fig. 10 and Fig. 16, the laser projection apparatus further includes a scattering wheel 71. The scattering wheel 71 is located on the optical path of the laser beams emitted from the beam-combining component 54, and is controlled by a motor to rotate. In some embodiments, a material of a wheel of the scattering wheel 71 is a diffusion sheet material. In some other embodiments, the wheel of the scattering wheel 71 includes a transparent glass, and microstructures located on a surface of the transparent glass, or a diffuser coated on a surface of the transparent glass. In this way, the laser beams are dynamically diffused by the diffusion sheet while they pass through the diffusion sheet, thereby some spatially random phases are generated for the laser beams, so that the speckle effect caused by the high coherence of the laser beams during imaging is reduced, and the projection imaging quality is improved.

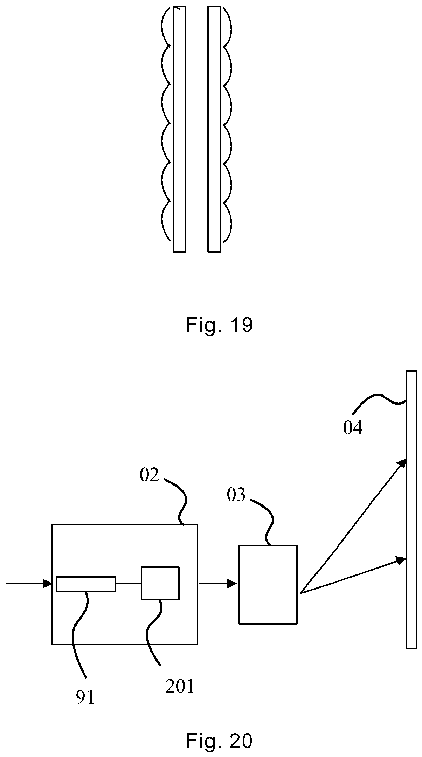

In some embodiments, as shown in Figs. 5, 10 and 16, the laser projection apparatus further includes a first diffusion component 61 and a second diffusion component 62. The first diffusion component 61 is fixedly located on the outgoing optical path of the first light-combining component 51, and is configured to statically diffuse the first laser beams and the second laser beams. The second diffusion component 62 is fixedly located on the outgoing optical path of the second light-combining component 52, and is configured to statically diffuse the laser beams emitted from the second light-combining component 52. The first diffusion component 61 uses, for example, the diffusion sheet material or a fly-eye lens (as shown in Fig. 19). The second diffusion component 62 uses, for example, the diffusion sheet material or the fly-eye lens (as shown in Fig. 19). The first laser beams, the second laser beams and the laser beams which are emitted from the second light-combining component 52 respectively pass through the first diffusion component 61 and the second diffusion component 62 that are fixedly located, and the spatial phases of the beams with various colors are increased, thereby a condition of constant phase, which causes an interference, is destroyed in a certain extent. In addition, by cooperatively using the first diffusion component 61, the second diffusion component 62 that are fixed and the movable scattering wheel 71, the effects of static diffusion and dynamic diffusion are superimposed, and divergence angles of the beams are diversified. However, since the difference of optical distances of the beams are diversified due to the diversification of the divergence angles and the optical distance determines the change of the phase, the phases of the beams change, so that a probability that generates the random phase is increased due to the difference of the optical distances. The random phase can generate a random speckle pattern, and when the random speckle pattern produces an integral effect on the human eye, the phenomenon of light and dark speckle is weaker, so that a speckle effect of the laser beams is reduced effectively, and the display quality of the projection imaging is improved.

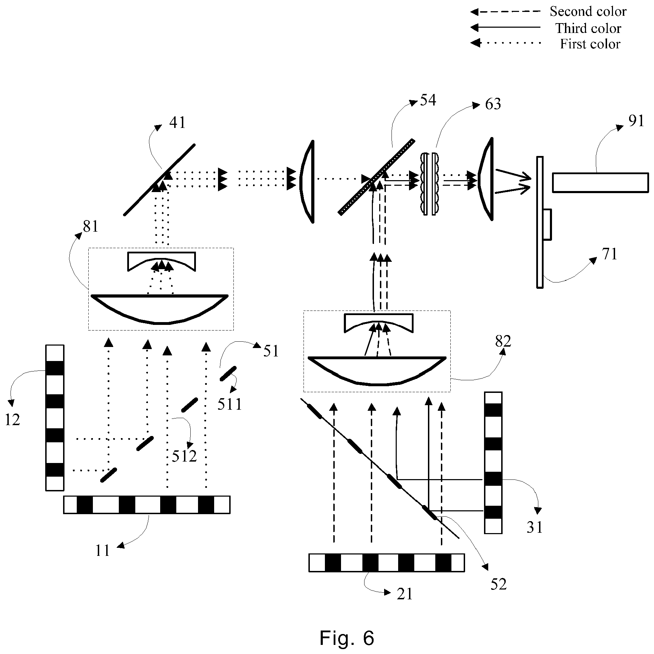

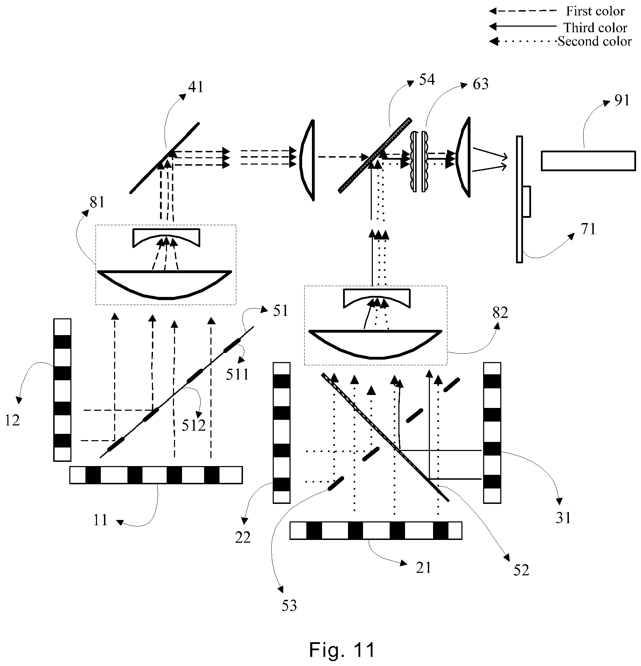

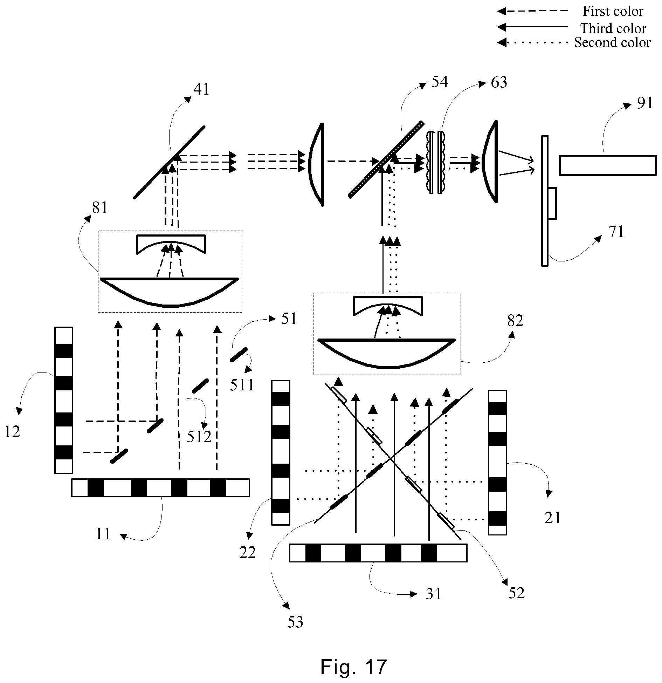

In some embodiments, as shown in Fig. 6, Fig. 11 and Fig. 17, the laser projection apparatus further includes a scattering wheel 71 and a third diffusion component 63. The third diffusion component 63 is fixedly located on the outgoing optical path of the beam-combining component 54, and statically diffuses the laser beams emitted from the beam-combining component 54. The third diffusion component 63 uses, for example, the diffusion sheet material or a fly-eye lens. The scattering wheel 71 is also located on the outgoing optical path of the beam-combining component 54, and is configured to dynamically diffuse the laser beams emitted from the beam-combining component 54. For example, the scattering wheel 71 is located on the outgoing optical path of the third diffusion component 63, or is located on an opposite side of the third diffusion component 63 away from the outgoing optical path. The third diffusion component 63 increases the spatial phase of the beams with various colors, and destroys the condition of constant phase, which causes interference, in a certain extent. In addition, the rotating scattering wheel 71 itself can generate some spatial random phase for the laser beams compared to the fixed third diffusion component 63 itself, and thus the coherence of the laser beams is better destroyed. Therefore, by cooperatively using the third diffusion component 63 and the movable scattering wheel 71, the effects of static diffusion and dynamic diffusion are superimposed, and divergence angle of the beams are diversified. However, since the difference of optical distances of the beams is diversified due to the diversification of the divergence angle and the optical distance determines the change of the phase, the phases of the beams change, so that a probability that generates the random phase is increased due to the difference of the optical distance. The random phase enable to generate a random speckle pattern, and when the random speckle pattern produces an integral effect on the human eye, the phenomenon of light and dark speckle is weaker, so that a speckle effect of the laser beams is reduced effectively, and the display quality of the projection imaging is improved.

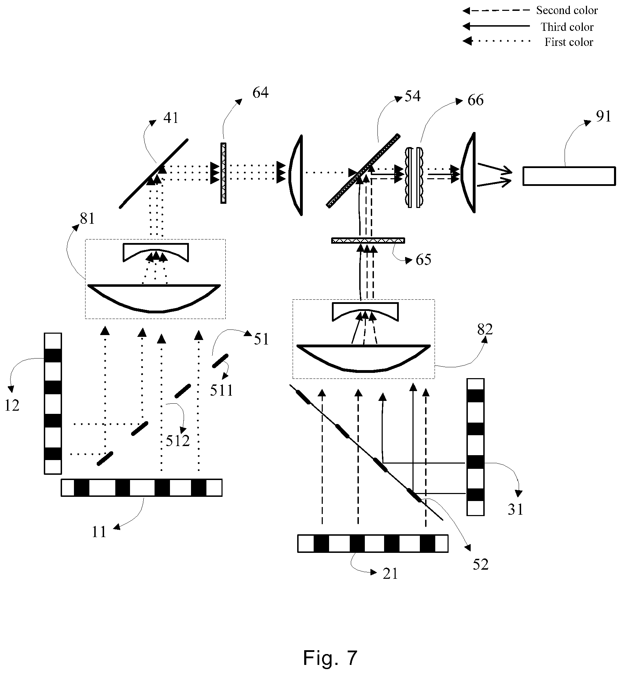

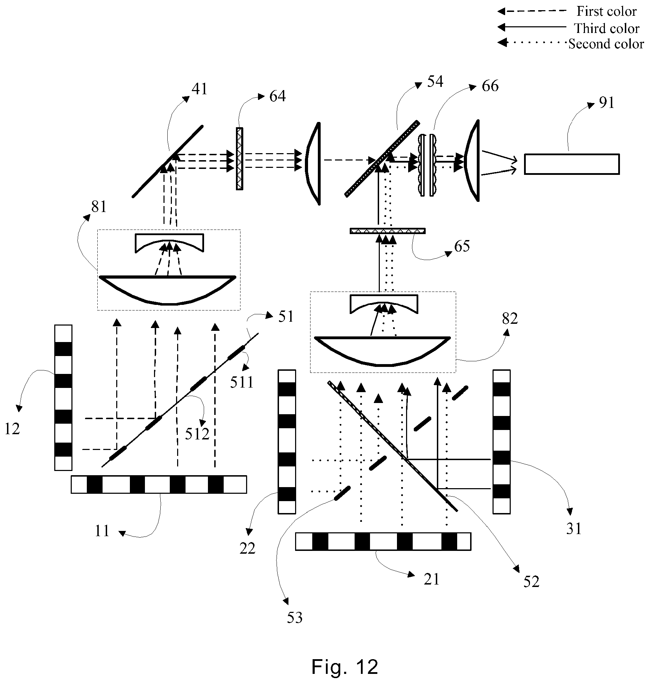

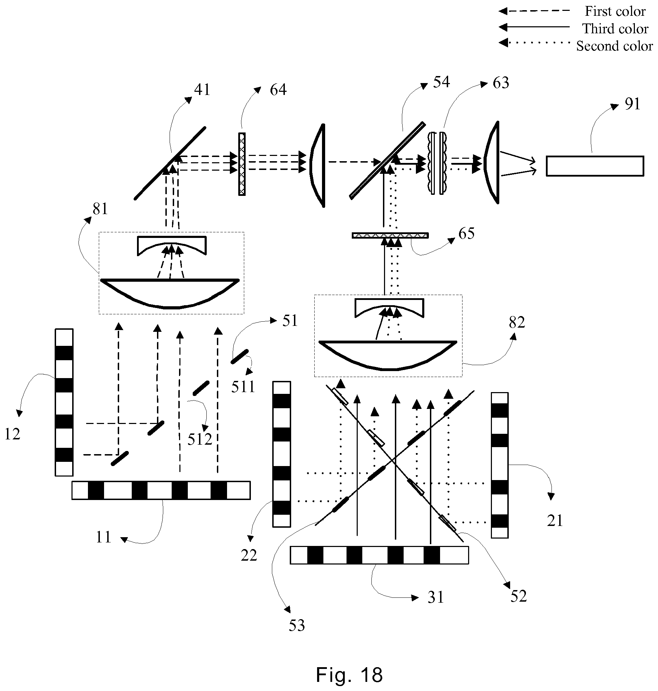

In some embodiments, as shown in Figs. 7, 12 and 18, the laser projection apparatus includes a first diffusion component 61, a second diffusion component 62 and a third diffusion component 63. The positions of the first diffusion component 61, the second diffusion component 62 and the third diffusion component 63 please refer to the aforementioned related contents, which will not be repeated here. The first diffusion component 61 and the second diffusion component 62 use, for example, a diffusion material, or a fly -eye lens, which is not limited. The first laser beams, the second laser beams, the third laser beams and the fourth laser beams respectively pass through the first diffusion component 61 and the second diffusion component 62 that are fixedly located, and the spatial phases thereof are all increased, thereby the condition of constant phase, which causes the interference, is destroyed in a certain extent. Next, a third diffusion component 63 located on the outgoing optical path of the beam-combining component 54 diffuses the combined beams again, the random phase is further increased, so that the coherence of the laser beams emitted from the beams combining component 54 is better destroyed. In some embodiments, the third diffusion component 63 uses the fly-eye lens (as shown in Fig. 19). Because the fly-eye lens has high beam transmittance and has a better homogenization and diffusion effect to the beams, when used in combination with the first diffusion component 61 and the second diffusion component 62, not only the speckle effect of the laser beam is effectively weakened, but also the energy of the beams is homogenized. Therefore, the use of a diffusion device that generates mechanical rotation is avoided, and the volume of the laser projection apparatus is further reduced.

In some embodiments, as shown in Fig. 20, the laser projection apparatus further includes an optical machine 02 and a lens 03. The optical machine 02 is located on the outgoing optical path of the beam-combining component 54. The optical machine 02 includes a beam homogenizing component 91 and a light valve element 201. The beam homogenizing component 91 is configured to homogenize the laser beams emitted from the beam-combining component 54, and transmits the homogeneous laser beams to the light valve element 201. The light valve element 201 is configured to modulate the homogeneous laser beams, and emits the modulated laser beams to the lens 03. The lens 03 is configured to image the modulated laser beams and project the image onto a screen 04 or any other displayable medium.

## Claims

1. A laser projection apparatus, **characterized in that** the laser projection apparatus comprises:
a first laser array (11) configured to emit first laser beams of a first color;
a second laser array (12) configured to emit second laser beams of the first color;
a first light-combining component (51) configured to make the first laser beams and
the second laser beams advance along a first direction;
wherein the first laser array (11) and the second laser array (12) are arranged perpendicular to each other, and the first light-combining component (51) is configured to transmit the first laser beams and reflect the second laser beams;
a third laser array (21) configured to emit third laser beams of a second color;
a fourth laser array (31) configured to emit fourth laser beams of a third color;
a second light-combining component (52) configured to make the third laser beams and the fourth laser beams advance along a second direction;
wherein the third laser array (21) and the fourth laser array (31) are arranged perpendicular to each other, and the second light-combining component (52) is configured to transmit the third laser beams and reflect the fourth laser beams;
a beam-combining component (54) located on an optical path of the first laser beams and the second laser beams emitted from the first light-combining component (51) and on an optical path of the third laser beams and the fourth laser beams emitted from the second light-combining component (52), wherein the beam-combining component (54) is configured to make the first laser beams and the second laser emitted from the first light-combining component (51), and the third laser beams and the fourth laser beams emitted from the second light-combining component (52) advance along a third direction, wherein
the first color, the second color and the third color are different from each other, and each of the first color, the second color and the third color is one of a red, green and blue color.

2. The laser projection apparatus according to claim 1, **characterized in that** the first color is a green color, the second color is a red color, and the third color is a blue color.

3. The laser projection apparatus according to claim 2, **characterized in that** the laser projection apparatus further comprises:
a reflection element (41) is located on an optical path between the first light-combining component (51) and the beam-combining component (54), and configured to reflect the first laser beams and the second beams emitted from the first light-combining component (51) to turn the first laser beams and the second laser beams emitted from the first light-combining component (51) a preset angle θ, where 60°≤θ≤125°.

4. The laser projection apparatus according to claim 2, **characterized in that** the first light-combining component (51) is a dichroic element, and polarization directions of the first laser beams is perpendicular to polarization directions of the second laser beams, or
the first light-combining component (51) comprises a plurality of first transmission parts (512) and a plurality of first reflection parts (511), the plurality of first transmission parts (512) and the plurality of first reflection parts (511) are alternately arranged, the plurality of first transmission parts (512) are configured to transmit the first laser beams, and the plurality of first reflection parts (511) are configured to reflect the second laser beams, or
the first light-combining component (51) comprises a single first transmission part (512) and a single first reflection part (511), the first transmission part (512) is configured to transmit the first laser beams, and the first reflection part (511) is configured to reflect the second laser beams.

5. The laser projection apparatus according to claim 1, **characterized in that** the second light-combining component (52) is a dichroic element, or
the second light-combining component (52) comprises a plurality of second transmission parts (522) and a plurality of second reflection parts (521), the plurality of second transmission parts (522) and the plurality of second reflection parts (521) are alternately arranged, the plurality of second transmission parts (522) are configured to transmit the third laser beams, the plurality of second reflection parts (521) are configured to reflect the fourth laser beams, or
the second light-combining component (52) comprises a single second transmission part (522) and a single second reflection part (521), the second transmission part (522) is configured to transmit the third laser beams, and the second reflection part (521) is configured to reflect the fourth laser beams.

6. The laser projection apparatus according to claim 1, **characterized in that** the laser projection apparatus further comprises:
a fifth laser array (22) configured to emit fifth laser beams of the second color; and
a third light-combining component (53) configured to, together with the second light-combining component (52), make the third laser beams, the fourth laser beams and the fifth laser beams advance along the second direction.

7. The laser projection apparatus according to claim 6, **characterized in that**
the third laser array (21) and the fifth laser array (22) are arranged perpendicular to each other, and the fourth laser array (31) and the fifth laser array (22) are arranged opposite to each other,
the first light-combining component (51) is configured to transmit the first laser beams, and reflect the second laser beams, the second light-combining component (52) and the third light-combining component (53) are arranged in an X type, the second light-combining component (52) is configured to transmit the third laser beams and the fifth laser beams, and reflect the fourth laser beams, and the third light-combining component (53) is configured to transmit the third laser beams and the fourth laser beams, and reflect the fifth laser beams.

8. The laser projection apparatus according to claim 7, **characterized in that** the first light-combining component (51) comprises a plurality of first transmission parts (512) and a plurality of first reflection parts (511), and the plurality of first transmission parts (512) and the plurality of first reflection parts (511) are alternately arranged;
the second light-combining component (52) is a dichroic element, or the second light-combining component (52) comprises a plurality of second transmission parts (522) and a plurality of second reflection parts (521), and the plurality of second transmission parts (522) and the plurality of second reflection parts (521) are alternately arranged;
the third light-combining component (53) comprises a plurality of third transmission parts (532) and a plurality of third reflection parts (531), and the plurality of third transmission parts (532) and the plurality of third reflection parts (531) are alternately arranged.

9. The laser projection apparatus according to claim 6, **characterized in that** polarization directions of the third laser beams and the fifth laser beams are perpendicular to each other.

10. The laser projection apparatus according to claim 9, **characterized in that**
the fifth laser array (22) and the fourth laser array (31) are arranged perpendicular to each other, and the fifth laser array (22) and the third laser array (21) are arranged opposite to each other,
the first light-combining component (51) is configured to transmit the first laser beams and reflect the second laser beams, the second light-combining component (52) and the third light-combining component (53) are arranged in an X type, the second light-combining component (52) is configured to transmit the fourth laser beams and the fifth laser beams, and reflect the third laser beams, and the third light-combining component (53) is configured to transmit the third laser beams and the fourth laser beams, and reflect the fifth laser beams.

11. The laser projection apparatus according to claim 10, **characterized in that** the first light-combining component (51) comprises a plurality of first transmission parts (512) and a plurality of first reflection parts (511), and the plurality of first transmission parts (512) and the plurality of first reflection parts (511) are alternately arranged;
the second light-combining component (52) comprises a plurality of second transmission parts (522) and a plurality of second reflection parts (521), and the plurality of second transmission parts (522) and the plurality of second reflection parts (521) are alternately arranged; and
the third light-combining component (53) comprises a plurality of third transmission parts (532) and a plurality of third reflection parts (531), and the plurality of third transmission parts (532) and the plurality of third reflection parts (531) are alternately arranged.

12. The laser projection apparatus according to claim 1, **characterized in that** the laser projection apparatus further comprises a scattering wheel (71) located on an outgoing optical path of the beam-combining component (54), and configured to be controlled to rotate to scatter beams emitted from the beam-combining component (54).

13. The laser projection apparatus according to claim 12, **characterized in that** the laser projection apparatus further comprises:
a first diffusion component (61) fixedly located on an outgoing optical path of the first light-combining component (51), and configured to statically diffuse the first laser beams and the second laser beams;
a second diffusion component (62) fixedly located on an outgoing optical path of the second light-combining component (52), and configured to statically diffuse the third laser beams and the fourth laser beams; and
a third diffusion component (63) fixedly located on an outgoing optical path of the beam-combining component (54), and configured to statically diffuse first laser beams, second laser beams, third laser beams and fourth laser beams emitted from the beam-combining component (54).

## Patentansprüche

1. Laserprojektionsvorrichtung, **dadurch gekennzeichnet, dass** die Laserprojektionsvorrichtung umfasst:
ein erstes Laserarray (11), das zum Aussenden von ersten Laserstrahlen einer ersten Farbe konfiguriert ist;
ein zweites Laserarray (12) das zum Aussenden von zweiten Laserstrahlen der ersten Farbe konfiguriert ist;
eine erste Lichtkombinationskomponente (51), die zum Veranlassen, dass die ersten Laserstrahlen und die zweiten Laserstrahlen entlang einer ersten Richtung vordringen, konfiguriert ist;
wobei das erste Laserarray (11) und das zweite Laserarray (12) senkrecht zueinander angeordnet sind und die erste Lichtkombinationskomponente (51) zum Übertragen der ersten Laserstrahlen und Reflektieren der zweiten Laserstrahlen konfiguriert ist;
ein drittes Laserarray (21), das zum Aussenden von dritten Laserstrahlen einer zweiten Farbe konfiguriert ist;
ein viertes Laserarray (31), das zum Aussenden von vierten Laserstrahlen einer dritten Farbe konfiguriert ist;
eine zweite Lichtkombinationskomponente (52), die zum Veranlassen, dass die dritten Laserstrahlen und die vierten Laserstrahlen entlang einer zweiten Richtung vordringen, konfiguriert ist;
wobei das dritte Laserarray (21) und das vierte Laserarray (31) senkrecht zueinander angeordnet sind und die zweite Lichtkombinationskomponente (52) zum Übertragen der dritten Laserstrahlen und Reflektieren der vierten Laserstrahlen konfiguriert ist;
eine Strahlenkombinationskomponente (54), die sich in einem optischen Pfad der ersten Laserstrahlen und der zweiten Laserstrahlen, welche von der ersten Lichtkombinationskomponente (51) ausgesendet werden, und in einem optischen Pfad der dritten Laserstrahlen und der vierten Laserstrahlen, welche von der zweiten Lichtkombinationskomponente (52) ausgesendet werden, befindet, wobei die Strahlenkombinationskomponente (54) zum Veranlassen, dass die ersten Laserstrahlen und die zweiten Laserstrahlen, welche von der ersten Lichtkombinationskomponente (51) ausgesendet werden,
und die dritten Laserstrahlen und die vierten Laserstrahlen, welche von der zweiten Lichtkombinationskomponente (52) ausgesendet werden, entlang einer dritten Richtung vordringen, konfiguriert ist, wobei
sich die erste Farbe, die zweite Farbe und die dritte Farbe voneinander unterscheiden und jede der ersten Farbe, der zweiten Farbe und der dritten Farbe eine einer roten, grünen und blauen Farbe ist.

2. Laserprojektionsvorrichtung nach Anspruch 1, **dadurch gekennzeichnet, dass** die erste Farbe eine grüne Farbe ist, die zweite Farbe eine rote Farbe ist und die dritte Farbe eine blaue Farbe ist.

3. Laserprojektionsvorrichtung nach Anspruch 2, **dadurch gekennzeichnet, dass** die Laserprojektionsvorrichtung ferner umfasst:
ein Reflexionselement (41), das sich in einem optischen Pfad zwischen der ersten Lichtkombinationskomponente (51) und der Strahlenkombinationskomponente (54) befindet und zum Reflektieren der ersten Laserstrahlen und der zweiten Laserstrahlen, welche von der ersten Lichtkombinationskomponente (51) ausgesendet werden, zum Drehen der ersten Laserstrahlen und der zweiten Laserstrahlen, welche von der ersten Lichtkombinationskomponente (51) ausgesendet werden, um einen voreingestellten Winkel Θ konfiguriert ist, wobei 60° ≤ Θ ≤ 125° ist.

4. Laserprojektionsvorrichtung nach Anspruch 2, **dadurch gekennzeichnet, dass** die erste Lichtkombinationskomponente (51) ein dichroitisches Element ist und Polarisationsrichtungen der ersten Laserstrahlen senkrecht zu Polarisationsrichtungen der zweiten Laserstrahlen verlaufen, oder
die erste Lichtkombinationskomponente (51) mehrere erste Übertragungsteile (512) und mehrere erste Reflexionsteile (511) umfasst, die mehreren ersten Übertragungsteile (512) und die mehreren ersten Reflexionsteile (511) abwechselnd angeordnet sind, die mehreren ersten Übertragungsteile (512) zum Übertragen der ersten Laserstrahlen konfiguriert sind und die mehreren ersten Reflexionsteile (511) zum Reflektieren der zweiten Laserstrahlen konfiguriert sind, oder
die erste Lichtkombinationskomponente (51) ein einzelnes erstes Übertragungsteil (512) und ein einzelnes erstes Reflexionsteil (511) umfasst, das erste Übertragungsteil (512) zum Übertragen der ersten Laserstrahlen konfiguriert ist und das erste Reflexionsteil (511) zum Reflektieren der zweiten Laserstrahlen konfiguriert ist.

5. Laserprojektionsvorrichtung nach Anspruch 1, **dadurch gekennzeichnet, dass** die zweite Lichtkombinationskomponente (52) ein dichroitisches Element ist, oder
die zweite Lichtkombinationskomponente (52) mehrere zweite Übertragungsteile (522) und mehrere zweite Reflexionsteile (521) umfasst, die mehreren zweiten Übertragungsteile (522) und die mehreren zweiten Reflexionsteile (521) abwechselnd angeordnet sind, die mehreren zweiten Übertragungsteile (522) zum Übertragen der dritten Laserstrahlen konfiguriert sind und die mehreren zweiten Reflexionsteile (521) zum Reflektieren der vierten Laserstrahlen konfiguriert sind, oder
die zweite Lichtkombinationskomponente (52) ein einzelnes zweites Übertragungsteil (522) und ein einzelnes zweites Reflexionsteil (521) umfasst, das zweite Übertragungsteil (522) zum Übertragen der dritten Laserstrahlen konfiguriert ist und das zweite Reflexionsteil (521) zum Reflektieren der vierten Laserstrahlen konfiguriert ist.

6. Laserprojektionsvorrichtung nach Anspruch 1, **dadurch gekennzeichnet, dass** die Laserprojektionsvorrichtung ferner umfasst:
ein fünftes Laserarray (22), das zum Aussenden von fünften Laserstrahlen der zweiten Farbe konfiguriert ist; und
eine dritte Lichtkombinationskomponente (53), die zum Veranlassen, zusammen mit der zweiten Lichtkombinationskomponente (52), dass die dritten Laserstrahlen, die vierten Laserstrahlen und die fünften Laserstrahlen entlang der zweiten Richtung vordringen, konfiguriert ist.

7. Laserprojektionsvorrichtung nach Anspruch 6, **dadurch gekennzeichnet, dass** das dritte Laserarray (21) und das fünfte Laserarray (22) senkrecht zueinander angeordnet sind und das vierte Laserarray (31) und das fünfte Laserarray (22) einander gegenüberliegend angeordnet sind,
die erste Lichtkombinationskomponente (51) zum Übertragen der ersten Laserstrahlen und Reflektieren der zweiten Laserstrahlen konfiguriert ist, die zweite Lichtkombinationskomponente (52) und die dritte Lichtkombinationskomponente (53) X-artig angeordnet sind, die zweite Lichtkombinationskomponente (52) zum Übertragen der dritten Laserstrahlen und der fünften Laserstrahlen und Reflektieren der vierten Laserstrahlen konfiguriert ist, und die dritte Lichtkombinationskomponente (53) zum Übertragen der dritten Laserstrahlen und der vierten Laserstrahlen und Reflektieren der fünften Laserstrahlen konfiguriert ist.

8. Laserprojektionsvorrichtung nach Anspruch 7, **dadurch gekennzeichnet, dass** die erste Lichtkombinationskomponente (51) mehrere erste Übertragungsteile (512) und mehrere erste Reflexionsteile (511) umfasst und die mehreren ersten Übertragungsteile (512) und die mehreren ersten Reflexionsteile (511) abwechselnd angeordnet sind;
die zweite Lichtkombinationskomponente (52) ein dichroitisches Element ist, oder die zweite Lichtkombinationskomponente (52) mehrere zweite Übertragungsteile (522) und mehrere zweite Reflexionsteile (521) umfasst und die mehreren zweiten Übertragungsteile (522) und die mehreren zweiten Reflexionsteile (521) abwechselnd angeordnet sind;
die dritte Lichtkombinationskomponente (53) mehrere dritte Übertragungsteile (532) und mehrere dritte Reflexionsteile (531) umfasst und die mehreren dritten Übertragungsteile (532) und die mehreren dritten Reflexionsteile (531) abwechselnd angeordnet sind.

9. Laserprojektionsvorrichtung nach Anspruch 6, **dadurch gekennzeichnet, dass** die Polarisationsrichtungen der dritten Laserstrahlen und der fünften Laserstrahlen senkrecht zueinander verlaufen.

10. Laserprojektionsvorrichtung nach Anspruch 9, **dadurch gekennzeichnet, dass** das fünfte Laserarray (22) und das vierte Laserarray (31) senkrecht zueinander angeordnet sind und das fünfte Laserarray (22) und das dritte Laserarray (21) einander gegenüberliegend angeordnet sind,
die erste Lichtkombinationskomponente (51) zum Übertragen der ersten Laserstrahlen und Reflektieren der zweiten Laserstrahlen konfiguriert ist, die zweite Lichtkombinationskomponente (52) und die dritte Lichtkombinationskomponente (53) X-artig angeordnet sind, die zweite Lichtkombinationskomponente (52) zum Übertragen der vierten und der fünften Laserstrahlen und Reflektieren der dritten Laserstrahlen konfiguriert ist, und die dritte Lichtkombinationskomponente (53) zum Übertragen der dritten Laserstrahlen und der vierten Laserstrahlen und Reflektieren der fünften Laserstrahlen konfiguriert ist.

11. Laserprojektionsvorrichtung nach Anspruch 10, **dadurch gekennzeichnet, dass** die erste Lichtkombinationskomponente (51) mehrere erste Übertragungsteile (512) und mehrere erste Reflexionsteile (511) umfasst und die mehreren ersten Übertragungsteile (512) und die mehreren ersten Reflexionsteile (511) abwechselnd angeordnet sind;
die zweite Lichtkombinationskomponente (52) mehrere zweite Übertragungsteile (522) und mehrere zweite Reflexionsteile (521) umfasst und die mehreren zweiten Übertragungsteile (522) und die mehreren zweiten Reflexionsteile (521) abwechselnd angeordnet sind; und die dritte Lichtkombinationskomponente (53) mehrere dritte Übertragungsteile (532) und mehrere dritte Reflexionsteile (531) umfasst und die mehreren dritten Übertragungsteile (532) und die mehreren dritten Reflexionsteile (531) abwechselnd angeordnet sind.

12. Laserprojektionsvorrichtung nach Anspruch 1, **dadurch gekennzeichnet, dass** die Laserprojektionsvorrichtung ferner ein Streurad (71) umfasst, das sich in einem ausgehenden optischen Pfad der Strahlenkombinationskomponente (54) befindet und dazu konfiguriert ist, zum Rotieren gesteuert zu werden, um Strahlen, die von der Strahlenkombinationskomponente (54) ausgesendet werden, zu streuen.

13. Laserprojektionsvorrichtung nach Anspruch 12, **dadurch gekennzeichnet, dass** die Laserprojektionsvorrichtung ferner umfasst:
eine erste Diffusionskomponente (61), die starr in einem ausgehenden optischen Pfad der ersten Lichtkombinationskomponente (51) angeordnet ist und zum statischen Diffundieren der ersten Laserstrahlen und der zweiten Laserstrahlen konfiguriert ist;
eine zweite Diffusionskomponente (62), die starr in einem ausgehenden optischen Pfad der zweiten Lichtkombinationskomponente (52) angeordnet ist und zum statischen Diffundieren der dritten Laserstrahlen und der vierten Laserstrahlen konfiguriert ist; und
eine dritte Diffusionskomponente (63), die starr in einem ausgehenden optischen Pfad der dritten Lichtkombinationskomponente (54) angeordnet ist und zum statischen Diffundieren von ersten Laserstrahlen, zweiten Laserstrahlen, dritten Laserstrahlen und vierten Laserstrahlen, welche von der Strahlenkombinationskomponente (54) ausgesendet werden, konfiguriert ist.

## Revendications

1. Appareil de projection laser, **caractérisé en ce que** l'appareil de projection laser comprend :
un premier réseau laser (11) configuré pour émettre des premiers faisceaux laser d'une première couleur ;
un deuxième réseau laser (12) configuré pour émettre des deuxièmes faisceaux laser de la première couleur ;
un premier composant de combinaison de lumières (51) configuré pour amener les premiers faisceaux laser et les deuxièmes faisceaux laser à avancer le long d'une première direction ;
dans lequel le premier réseau laser (11) et le deuxième réseau laser (12) sont agencés perpendiculairement l'un à l'autre, et le premier composant de combinaison de lumières (51) est configuré pour transmettre les premiers faisceaux laser et refléter les deuxièmes faisceaux laser ;
un troisième réseau laser (21) configuré pour émettre des troisièmes faisceaux laser d'une deuxième couleur ;
un quatrième réseau laser (31) configuré pour émettre des quatrièmes faisceaux laser d'une troisième couleur ;
un deuxième composant de combinaison de couleurs (52) configuré pour amener les troisièmes faisceaux laser et
les quatrièmes faisceaux laser à avancer le long d'une deuxième direction ;
dans lequel le troisième réseau laser (21) et le quatrième réseau laser (31) sont agencés perpendiculairement l'un à l'autre, et le deuxième composant de combinaison de lumières (52) est configuré pour transmettre les troisièmes faisceaux laser et refléter les quatrièmes faisceaux laser ;
un composant de combinaison de faisceaux (54) situé sur un trajet optique des premiers faisceaux laser et des deuxièmes faisceaux laser émis depuis le premier composant de combinaison de lumières (51) et sur un trajet optique des troisièmes faisceaux laser et des quatrièmes faisceaux laser émis depuis le deuxième composant de combinaison de lumières (52), dans lequel le composant de combinaison de faisceaux (54) est configuré pour amener les premiers faisceaux laser et les deuxièmes faisceaux laser émis depuis le premier composant de combinaison de lumières (51) et les troisièmes faisceaux laser et les quatrièmes faisceaux laser émis depuis le deuxième composant de combinaison de lumières (52) à avancer le long d'une troisième direction, dans lequel la première couleur, la deuxième couleur et la troisième couleur sont différentes les unes des autres, et chacune de la première couleur, la deuxième couleur et la troisième couleur est l'une parmi une couleur rouge, une couleur verte et une couleur bleue.

2. Appareil de projection laser selon la revendication 1, **caractérisé en ce que** la première couleur est une couleur verte, la deuxième couleur est une couleur rouge et la troisième couleur est une couleur bleue.

3. Appareil de projection laser selon la revendication 2, **caractérisé en ce que** l'appareil de projection laser comprend en outre :
un élément de réflexion (41) qui est situé sur un trajet optique entre le premier composant de combinaison de lumières (51) et le composant de combinaison de faisceaux (54), et configuré pour refléter les premiers faisceaux laser et les deuxièmes faisceaux laser émis depuis le premier composant de combinaison de lumières (51) pour tourner les premiers faisceaux laser et les deuxièmes faisceaux laser émis depuis le premier composant de combinaison de lumières (51) d'un angle prédéfini θ, où 60°≤θ≤125°.

4. Appareil de projection laser selon la revendication 2, **caractérisé en ce que** le premier composant de combinaison de lumières (51) est un élément dichroïque, et des directions de polarisation des premiers faisceaux laser sont perpendiculaires à des directions de polarisation des deuxièmes faisceaux laser, ou
le premier composant de combinaison de lumières (51) comprend une pluralité de premières parties de transmission (512) et une pluralité de premières parties de réflexion (511), la pluralité de premières parties de transmission (512) et la pluralité de premières parties de réflexion (511) sont agencées en alternance, la pluralité de premières parties de transmission (512) sont configurées pour transmettre les premiers faisceaux laser, et la pluralité de premières parties de réflexion (511) sont configurées pour refléter les deuxièmes faisceaux laser, ou
le premier composant de combinaison de lumières (51) comprend une première partie de transmission (512) unique et une première partie de réflexion (511) unique, la première partie de transmission (512) est configurée pour transmettre les premiers faisceaux laser, et la première partie de réflexion (511) est configurée pour refléter les deuxièmes faisceaux laser.

5. Appareil de projection laser selon la revendication 1, **caractérisé en ce que** le deuxième composant de combinaison de lumières (52) est un élément dichroïque, ou
le deuxième composant de combinaison de lumières (52) comprend une pluralité de deuxièmes parties de transmission (522) et une pluralité de deuxièmes parties de réflexion (521), la pluralité de deuxièmes parties de transmission (522) et la pluralité de deuxièmes parties de réflexion (521) sont agencées en alternance, la pluralité de deuxièmes parties de transmission (522) sont configurées pour transmettre les troisièmes faisceaux laser, et la pluralité de deuxièmes parties de réflexion (521) sont configurées pour refléter les quatrièmes faisceaux laser, ou
le deuxième composant de combinaison de lumières (52) comprend une deuxième partie de transmission (522) unique et une deuxième partie de réflexion (521) unique, la deuxième partie de transmission (522) est configurée pour transmettre les troisièmes faisceaux laser, et la deuxième partie de réflexion (521) est configurée pour refléter les quatrièmes faisceaux laser.

6. Appareil de projection laser selon la revendication 1, **caractérisé en ce que** l'appareil de projection laser comprend en outre :
un cinquième réseau laser (22) configuré pour émettre des cinquièmes faisceaux laser de la deuxième couleur ; et
un troisième composant de combinaison de lumières (53) configuré pour, avec le deuxième composant de combinaison de lumières (52), amener les troisièmes faisceaux laser, les quatrièmes faisceaux laser et les cinquièmes faisceaux laser à avancer le long de la deuxième direction.

7. Appareil de projection laser selon la revendication 6, **caractérisé en ce que** le troisième réseau laser (21) et le cinquième réseau laser (22) sont agencés perpendiculairement l'un à l'autre, et le quatrième réseau laser (31) et le cinquième réseau laser (22) sont agencés à l'opposé l'un de l'autre,
le premier composant de combinaison de lumières (51) est configuré pour transmettre les premiers faisceaux laser et refléter les deuxièmes faisceaux laser, le deuxième composant de combinaison de lumières (52) et le troisième composant de combinaison de lumières (53) sont agencés dans un type en X, le deuxième composant de combinaison de lumières (52) est configuré pour transmettre les troisièmes faisceaux laser et les cinquièmes faisceaux laser et refléter les quatrièmes faisceaux laser, et le troisième composant de combinaison de lumières (53) est configuré pour transmettre les troisièmes faisceaux laser et les quatrièmes faisceaux laser, et refléter les cinquièmes faisceaux laser.

8. Appareil de projection laser selon la revendication 7, **caractérisé en ce que** le premier composant de combinaison de lumières (51) comprend une pluralité de premières parties de transmission (512) et une pluralité de premières parties de réflexion (511), et la pluralité de premières parties de transmission (512) et la pluralité de premières parties de réflexion (511) sont agencées en alternance ;
le deuxième composant de combinaison de lumières (52) est un élément dichroïque, ou le deuxième composant de combinaison de lumières (52) comprend une pluralité de deuxièmes parties de transmission (522) et une pluralité de deuxièmes parties de réflexion (521), et la pluralité de deuxièmes parties de transmission (522) et la pluralité de deuxièmes parties de réflexion (521) sont agencées en alternance ;
le troisième composant de combinaison de lumières (53) comprend une pluralité de troisièmes parties de transmission (532) et une pluralité de troisièmes parties de réflexion (531), et la pluralité de troisièmes parties de transmission (532) et la pluralité de troisièmes parties de réflexion (531) sont agencées en alternance.

9. Appareil de projection laser selon la revendication 6, **caractérisé en ce que** les directions de polarisation des troisièmes faisceaux laser et des cinquièmes faisceaux laser sont perpendiculaires les unes aux autres.

10. Appareil de projection laser selon la revendication 9, **caractérisé en ce que** le cinquième réseau laser (22) et le quatrième réseau laser (31) sont agencés perpendiculairement l'un à l'autre, et le cinquième réseau laser (22) et le troisième réseau laser (21) sont agencés à l'opposé l'un de l'autre,
le premier composant de combinaison de lumières (51) est configuré pour transmettre les premiers faisceaux laser et refléter les deuxièmes faisceaux laser, le deuxième composant de combinaison de lumières (52) et le troisième composant de combinaison de lumières (53) sont agencés dans un type en X, le deuxième composant de combinaison de lumières (52) est configuré pour transmettre les quatrièmes faisceaux laser et les cinquièmes faisceaux laser et refléter les troisièmes faisceaux laser, et le troisième composant de combinaison de lumières (53) est configuré pour transmettre les troisièmes faisceaux laser et les quatrièmes faisceaux laser, et refléter les cinquièmes faisceaux laser.

11. Appareil de projection laser selon la revendication 10, **caractérisé en ce que** le premier composant de combinaison de lumières (51) comprend une pluralité de premières parties de transmission (512) et une pluralité de premières parties de réflexion (511), et la pluralité de premières parties de transmission (512) et la pluralité de premières parties de réflexion (511) sont agencées en alternance ;
le deuxième composant de combinaison de lumières (52) comprend une pluralité de deuxièmes parties de transmission (522) et une pluralité de deuxièmes parties de réflexion (521), et la pluralité de deuxièmes parties de transmission (522) et la pluralité de deuxièmes parties de réflexion (521) sont agencées en alternance ; et
le troisième composant de combinaison de lumières (53) comprend une pluralité de troisièmes parties de transmission (532) et une pluralité de troisièmes parties de réflexion (531), et la pluralité de troisièmes parties de transmission (532) et la pluralité de troisièmes parties de réflexion (531) sont agencées en alternance.

12. Appareil de projection laser selon la revendication 1, **caractérisé en ce que** l'appareil de projection laser
comprend en outre une roue de dispersion (71) située sur un trajet optique sortant du composant de combinaison de faisceaux (54), et configurée pour être commandée pour tourner pour disperser des faisceaux émis depuis le composant de combinaison de faisceaux (54).

13. Appareil de projection laser selon la revendication 12, **caractérisé en ce que** l'appareil de projection laser comprend en outre :
un premier composant de diffusion (61) situé fixement sur un trajet optique sortant du premier composant de combinaison de lumières (51) et configuré pour diffuser statiquement les premiers faisceaux laser et les deuxièmes faisceaux laser ;
un deuxième composant de diffusion (62) situé fixement sur un trajet optique sortant du deuxième composant de combinaison de lumières (52) et configuré pour diffuser statiquement les troisièmes faisceaux laser et les quatrièmes faisceaux laser ; et
un troisième composant de diffusion (63) situé fixement sur un trajet optique sortant du composant de combinaison de faisceaux (54) et configuré pour diffuser statiquement les premiers faisceaux laser, les deuxièmes faisceaux laser, les troisièmes faisceaux laser et les quatrièmes faisceaux laser émis depuis le composant de combinaison de faisceaux (54).
